# EUROPÄISCHE PATENTSCHRIFT

(11) **EP 0 899 170 B1**
(45) Veröffentlichungstag und Bekanntmachung des Hinweises auf die Patenterteilung: **04.05.2005**
(21) Anmeldenummer: 98115170.7
(22) Anmeldetag: 12.08.1998
(51) Int. Cl.: B60R 21/20, B60R 13/00, G09F 7/16

(54) **Abdeckung für einen Airbag**
Cover for an airbag
Couvercle pour coussin gonflable

(30) Priorität: 23.08.1997 DE 29715185 U
(43) Veröffentlichungstag der Anmeldung: 03.03.1999
(73) Patentinhaber: TRW Automotive Safety Systems GmbH, 63743 Aschaffenburg (DE)
(72) Erfinder: Kreile, Holger, 63820 Elsenfeld (DE)
(74) Vertreter: Degwert, Hartmut, Dipl.-Phys.

(56) Entgegenhaltungen:
- EP-A- 0 742 123
- EP-A- 0 742 543
- DE-A- 3 704 190
- DE-U- 29 607 536
- PATENT ABSTRACTS OF JAPAN vol. 1997, no. 06, 30. Juni 1997 (1997-06-30) & JP 09 048315 A (NIPPON NAME PLATE KOGYO KK;IZUMI JIDOSHA KK), 18. Februar 1997 (1997-02-18)

## Beschreibung

Die Neuerung betrifft eine Airbag-Abdeckung zur Verbindung mit einer Fahrzeugstruktur, mit einer Platte mit einer Frontseite und einer Logostruktur auf der Frontseite, die mit wenigstens einem sich in die Platte erstreckenden Stift an der Platte befestigt ist.

Kraftfahrzeughersteller haben Firmenlogos entwickelt, die inzwischen allgemein bekannt sind und außen am Kühlergrill, an der Motorabdeckhaube, an der Kofferraumabdeckhaube oder anderen Stellen und innen, insbesondere im Zentralbereich des Lenkrads, angeordnet sind. Seit Einführung des Airbags dient dieser zentrale Bereich des Lenkrades der Unterbringung des Airbag-Moduls, das üblicherweise unter einer Abdeckung angeordnet ist, die ein- oder mehrteilig aufklappbar mit dem Fahrzeuglenkrad oder dem Gehäuse für das Airbag-Modul befestigt ist. Soweit es sich bei dem Firmenlogo um gesonderte, mit der Abdeckung verbundene Bauteile handelt, ergibt sich einmal das Problem, daß die Firmenlogos bzw. die zugehörigen Strukturen nicht im Bereich der Aufreiß- oder Scharnierlinien der Abdeckung angeordnet werden können, weil sie sonst das Aufklappen beeinträchtigen würden bzw. weil eine mehrteilige Ausbildung aus wirtschaftlichen Gründen kaum in Betracht kommt. Zum anderen besteht das Problem, daß die Logostruktur mit der Abdeckung absolut zuverlässig verbunden werden muß, damit ein Ablösen beim explosionsartigen Aufblasen des Airbags und dem damit verbundenen schlagartigen Aufklappen der Abdeckung bzw. ihrer Teile zuverlässig verhindert werden kann, weil andernfalls eine zusätzliche Gefährdung der Fahrzeuginsassen durch geschoßartig herumfliegende Logostrukturen oder Bruchstücke davon hervorgerufen würde.

Ein Aufkleben oder Aufleimen flächiger Firmenlogos auf Abdeckungen hat sich als ungeeignet erwiesen, weil einerseits die Haftkraft unter Berücksichtigung der verschiedensten äußeren Einflüsse (Temperatur, Feuchtigkeit) für die Laufzeit eines Fahrzeugs nicht gewährleistet werden kann und weil andererseits die Abdeckungen während des Aufklappens eine elastische Verformung erfahren, die auch bei anderweitig nicht geschädigten Haftverbindungen zu einem Ablösen des Firmenlogos führen können.

Man hat daher schon vorgeschlagen, flächige Firmenlogos mit einem zentralen Stift an der Abdeckung zu befestigen, das auf der Rückseite der Abdeckung vernietet oder umgebördelt wird (EP-7 421 123-A1). In einem anderen Fall hat man ein besonderes Trägerbauteil mit zentralem Befestigungsstift vorgesehen, auf dem ein flächiges Firmenlogo mittels randseitig angeordneter Laschen, durch Umbiegen der Lasche um den äußeren Rand des Trägerbauteils befestigt werden kann (EP-7 425 43-A1). Die Gattungsbildende DE 296 07 536 U1 beschreibt einen Niet mit einem Kopfbereich und einem Körperbereich, wobei auf dem Kopfbereich beispielsweise ein Logo aufgebracht ist. Der Körperbereich wird durch die Abdeckung geführt und ist mit einem Halteseil verbunden. Weiterhin zeigt die ebenfalls Gattungsbildende JP 09 48315 A ein flächiges Emblem mit splintartig ausgeführten Beinteilen, die durch ein Loch der Abdeckung und ein Gegenstück geführt und dann abgebogen werden. Diese und ähnliche Befestigungsarten setzen ein flächiges Firmenlogo und eine Logostruktur mit genügender Eigenfestigkeit voraus, weil andernfalls die Logostruktur bei der schlagartigen Beanspruchung in mehrere Stücke zerbrechen könnte, woraus wieder eine Gefährdung der Fahrzeuginsassen entstehen könnte, obwohl die punktförmige zentrale Befestigung hinreichend stabil ausgelegt ist.

Daraus ergibt sich die Aufgabe, eine Abdeckung der eingangs genannten Art vorzuschlagen, bei der auch Logostrukturen verwendet werden können, die nicht vollflächig und mit genügender Eigenfestigkeit ausgebildet sind, die aber gleichwohl mit allen Teilen fest mit der Abdeckung verbunden bleiben müssen, wenn letztere beim Aufblasen des Airbags schlagartig aufklappt.

Zur Lösung dieser Aufgabe ist bei einer Airbag-Abdeckung zur Verbindung mit einer Fahrzeugstruktur mit einer Frontseite und einer Logostruktur auf der Frontseite, die mit wenigstens einem sich in die Platte erstreckenden Stift an der Platte befestigt ist, vorgesehen, daß die Logostruktur aus mehreren miteinander verbundenen Stegelementen besteht und wenigstens einige der Stegelemente vorspringende Stifte aufweisen, die sich zur Befestigung der Logostruktur an der Platte in die Platte erstrecken.

Derartige Stegelemente können beispielsweise zu einzelnen Buchstaben geformt sein, die dann je für sich auf der Platte befestigt werden können. Sie können aber auch eine einstückige Logostruktur bilden, bei der jeweils kurzen Längenbereichen des aus stegartigen Elementen zusammengesetzten Gebildes Stifte zugeordnet sind, die durch die Platte hindurch steckbar und auf deren Rückseite plastisch umformbar sind, um die Logostruktur insgesamt auf der Platte der Abdeckung sicher zu befestigen.

Zweckmäßige Ausgestaltungen des Erfindungsgedankens sind in den Unteransprüchen beschrieben. Weitere Einzelheiten werden anhand der in den Figuren 1 bis 3 dargestellten Ausführungsbeispiele näher erläutert. Es zeigen:
Figur 1 ein erstes Ausführungsbeispiel eine Logostruktur gemäß der Erfindung in Draufsicht und Schnitt.
Figur 2 einen Ausschnitt aus einer erfindungsgemäßen Airbag-Abdeckung mit einer zweiten Ausführungsform einer Logostruktur in Draufsicht und Schnitt.
Figur 3 eine dritte Ausführungform einer Logostruktur gemäß der Erfindung in Draufsicht und Schnitt.

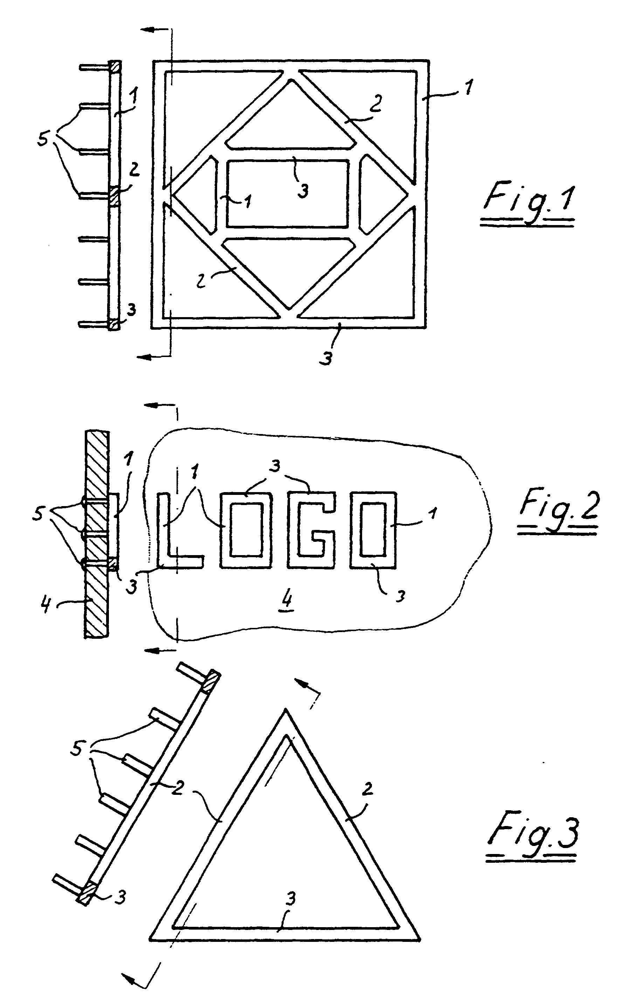

Die in Figur 1 dargestellte Logostruktur umfaßt einen quadratischen Rahmen mit einem darin angeordneten, um 45°C gedrehten kleineren quadratischen Rahmen und einem im kleineren quadratischen Rahmen, seitenparallel zu dem ersten quadratischen Rahmen, angeordneten Rechteck. In der Darstellung sind die vertikalen Stegelemente mit 1, die schräg verlaufenden Stegelemente mit 2 und die horizontal verlaufenden Stegelemente mit 3 bezeichnet. Alle Stegelemente 1, 2, 3 haben etwa die gleiche Breite und etwa den gleichen Querschnitt und sind mit einer Vielzahl von Stiften 5 ausgestattet, die zur Befestigung der Logostruktur an der Abdeckung dienen. Erfindungsgemäß können den Stegelementen 1, 2, 3 je nach Bedarf eine mehr oder weniger große Vielzahl von Stiften zugeordnet werden, wobei es lediglich darauf ankommt, daß jeder einzelne Stift 5 den jeweils zugehörigen Stegbereich bei einem explosionsartigen Aufblasen des Airbags sicher mit der Abdeckung verbunden hält. Tendenziell werden umso mehr Stifte 5 benötigt, je dünner bzw. schwächer der Querschnitt der Stegelemente 1, 2, 3 ist, wobei selbstverständlich die verwendeten Materialien eine große Rolle spielen. Die Anordnung einer Vielzahl von Stiften 5 erlaubt es nunmehr auch, Logostrukturen von Firmenlogos auf Abdeckungen für Airbag-Module anzubringen, die aus stegartigen Elementen 1, 2, 3 aufgebaut sind und die insgesamt keine genügende Eigenfestigkeit für eine punktförmige Befestigung an nur einer oder wenigen Stellen aufweisen.

Bei der Ausführungsform gemäß Figur 2 besteht das Firmenlogo aus einer Buchstabenfolge, wobei die einzelnen Buchstaben der Logostruktur wiederum aus schmalen, stegartigen, senkrechten Elementen 1 bzw. aus schmalen, stegartigen, waagerechten Elementen 3 bestehen. In diesem Fall ist ein Ausschnitt der Platte 4 der Abdeckung angedeutet, um in der Schnittdarstellung deutlich machen zu können, wie die Stifte 5 auf der Rückseite der Platte 4 der Abdeckung plastisch umgeformt sind.

Bei der Ausführungsform gemäß Figur 5 besteht die Logostruktur aus einem gleichschenkligen Dreieck mit einem schmalen, stegartigen, horizontalen Element 3 und zwei schmalen, stegartigen, schrägen Elementen 2. Aus der Schnittdarstellung ist ersichtlich, daß die Stifte 5 nicht zwangsläufig einen kreisrunden Querschnitt aufweisen müssen, sondern im Querschnitt auch ellipsenförmig oder flachrechteckig ausgebildet sein können.

Maßgebend ist in allen Fällen, daß jeweils einer bestimmten Länge der schmalen Stegelemente 1, 2, 3 ein Stift 5 zugeordnet ist, damit eine hinreichend hohe Zahl von Befestigungspunkten geschaffen werden kann und damit die zwischen den Befestigungspunkten liegenden Abschnitte der schmalen Stegelemente 1, 2, 3 beim Aufblasen des Airbags mechanisch nicht überbeansprucht werden und zerbrechen.

## Patentansprüche

1. Airbag-Abdeckung zur Verbindung mit einer Fahrzeugstruktur, mit einer Platte (4) mit einer Frontseite und einer Logostruktur auf der Frontseite, die mit wenigstens einem sich in die Platte (4) erstreckenden Stift (5) an der Platte (4) befestigt ist, **dadurch gekennzeichnet, daß** die Logostruktur aus mehreren miteinander verbundenen Stegelementen (1, 2, 3) besteht und wenigstens einige der Stegelemente (1, 2, 3) vorspringende Stifte (5) aufweisen, die sich zur Befestigung der Logostruktur an der Platte (4) in die Platte (4) erstrecken.

2. Airbag-Abdeckung nach Anspruch 1, **dadurch gekennzeichnet, daß** die Stegelemente (1, 2, 3) eine einstückige Logostruktur bilden.

3. Airbag-Abdeckung nach Anspruch 1 oder 2, **dadurch gekennzeichnet, daß** die Stegelemente (1, 2, 3) Oberflächenbereiche der Frontseite der Platte (4) umschließen, die der Gesamtfläche der Logostruktur entsprechen.

4. Airbag-Abdeckung nach einem der Ansprüche 1 bis 3, **dadurch gekennzeichnet, daß** die Stegelemente (1, 2, 3) zusammen nicht mehr als maximal 30 % der Gesamtfläche der Logostruktur abdecken.

5. Airbag-Abdeckung nach einem der Ansprüche 1 bis 4, **dadurch gekennzeichnet, daß** die Gesamtfläche von den die Außenkontur der Logostruktur bildenden Stegelementen (1, 2, 3) umschlossen ist.

6. Airbag-Abdeckung nach einem der Ansprüche 1 bis 5, **dadurch gekennzeichnet, daß** die zwischen den Stegelementen (1, 2, 3) liegenden Oberflächenbereiche der Frontseite der Platte (4) ein optischer Bestandteil eines Firmenlogos sind.

7. Airbag-Abdeckung nach einem der Ansprüche 1 bis 6, **dadurch gekennzeichnet, daß** die Stegelemente (1, 2, 3) mit vorspringenden Stiften (5) einstückig mit den Stiften (5) ausgebildet sind und aus einem thermoplastischen Kunststoff bestehen.

8. Airbag-Abdeckung nach Anspruch 7, **dadurch gekennzeichnet, daß** sich die Stifte (5) durch die Platte (4) erstrecken und auf der Rückseite der Platte (4) thermoplastisch umgeformt sind.

9. Airbag-Abdeckung nach einem der Ansprüche 1 bis 6, **dadurch gekennzeichnet, daß** die stegartigen Elemente (1, 2, 3) mit vorspringenden Stiften (5) einstückig mit den Stiften (5) ausgebildet sind und aus einem duroplastischen Kunststoff bestehen.

10. Airbag-Abdeckung nach Anspruch 9, **dadurch gekennzeichnet, daß** sich die Stifte (5) durch die Platte (4) erstrecken und auf der Rückseite der Platte (4) mittels Laserstrahl umgeformt sind.

11. Airbag-Abdeckung nach einem der Ansprüche 1 bis 6, **dadurch gekennzeichnet, daß** die Stegelemente (1, 2, 3) mit vorspringenden Stiften (5) einstückig mit den Stiften (5) ausgebildet sind und aus Metall, vorzugsweise aus einer Leichtmetallegierung, bestehen.

12. Airbag-Abdeckung nach Anspruch 11, **dadurch gekennzeichnet, daß** die Stegelemente (1, 2, 3) mit vorspringenden Stiften (5) aus einem Blechvormaterial ausgestanzt sind.

13. Airbag-Abdeckung nach einem der Ansprüche 7 bis 11, **dadurch gekennzeichnet, daß** die Stegelemente (1, 2, 3) mit vorspringenden Stiften (5) durch Eingießen oder Einpressen in Formen hergestellt sind.

## Claims

1. An airbag cover for connection to a vehicle structure, comprising a panel (4) with a front face and a logo structure on the front face, which is secured to the panel (4) by at least one pin (5) extending into the panel (4), **characterized in that** the logo structure is made up of a plurality of interconnected web elements (1, 2, 3) and at least some of the web elements (1, 2, 3) have projecting pins (5) that extend into the panel (4) for securing the logo structure to the panel (4).

2. The airbag cover according to Claim 1, **characterized in that** the web elements (1, 2, 3) form a one-piece logo structure.

3. The airbag cover according to Claim 1 or 2, **characterized in that** the web elements (1, 2, 3) encompass surface regions of the front face of the panel (4) which correspond to the overall surface area of the logo structure.

4. The airbag cover according to any of Claims 1 to 3, **characterized in that** the web elements (1, 2, 3) in total cover no more than a maximum of 30 % of the overall surface area of the logo structure.

5. The airbag cover according to any of Claims 1 to 4, **characterized in that** the overall surface area is surrounded by the web elements (1, 2, 3) forming the outer contour of the logo structure.

6. The airbag cover according to any of Claims 1 to 5, **characterized in that** the surface regions of the front face of the panel (4) that are situated between the web elements (1, 2, 3) are a visual component of a company logo.

7. The airbag cover according to any of Claims 1 to 6, **characterized in that** the web elements (1, 2, 3) with projecting pins (5) are formed integrally with the pins (5) and consist of a thermoplastic material.

8. The airbag cover according to Claim 7, **characterized in that** the pins (5) extend through the panel (4) and are reshaped thermoplastically on the rear side of the panel (4).

9. The airbag cover according to any of Claims 1 to 6, **characterized in that** the web-like elements (1, 2, 3) with projecting pins (5) are formed integrally with the pins (5) and consist of a thermosetting plastic material.

10. The airbag cover according to Claim 9, **characterized in that** the pins (5) extend through the panel (4) and are reshaped by means of a laser beam on the rear side of the panel (4).

11. The airbag cover according to any of Claims 1 to 6, **characterized in that** the web elements (1, 2, 3) with projecting pins (5) are formed integrally with the pins (5) and consist of metal, preferably of a light metal alloy.

12. The airbag cover according to Claim 11, **characterized in that** the web elements (1, 2, 3) with projecting pins (5) are punched out from a sheet metal stock material.

13. The airbag cover according to any of Claims 7 to 11, **characterized in that** the web elements (1, 2, 3) with projecting pins (5) are produced by casting in moulds or pressing in moulds.

## Revendications

1. Recouvrement d'airbag destiné à être relié à une structure de véhicule, comportant un panneau (4) avec une face frontale et une structure de logo sur la face frontale, qui est fixée sur le panneau (4) par au moins une broche (5) s'étendant dans le panneau (4), **caractérisé en ce que** la structure de logo est constituée par plusieurs éléments en forme de barrettes (1, 2, 3) et au moins quelques-uns des éléments en forme de barrettes (1, 2, 3) présentent des broches (5) en saillie qui s'étendent dans le panneau (4) pour fixer la structure de logo sur le panneau (4).

2. Recouvrement d'airbag selon la revendication 1, **caractérisé en ce que** les éléments en forme de barrettes (1, 2, 3) forment une structure de logo d'un seul tenant.

3. Recouvrement d'airbag selon la revendication 1 ou 2, **caractérisé en ce que** les éléments en forme de barrettes (1, 2, 3) entourent des zones de surface de la face frontale du panneau (4) qui correspondent à la surface totale de la structure de logo.

4. Recouvrement d'airbag selon l'une des revendications 1 à 3, **caractérisé en ce que** les éléments en forme de barrettes (1, 2, 3) ne couvrent en commun pas plus de 30 % au maximum de la surface totale de la structure de logo.

5. Recouvrement d'airbag selon l'une des revendications 1 à 4, **caractérisé en ce que** la surface totale est entourée par les éléments en forme de barrettes (1, 2, 3) formant le contour extérieur de la structure de logo.

6. Recouvrement d'airbag selon l'une des revendications 1 à 5, **caractérisé en ce que** les zones de surface de la face frontale du panneau (4) situées entre les éléments en forme de barrettes (1, 2, 3) sont un composant visuel d'un logo d'entreprise.

7. Recouvrement d'airbag selon l'une des revendications 1 à 6, **caractérisé en ce que** les éléments en forme de barrettes (1, 2, 3) sont réalisés d'un seul tenant avec les broches (5) et sont en une matière thermoplastique.

8. Recouvrement d'airbag selon la revendication 7, **caractérisé en ce que** les broches (5) s'étendent à travers le panneau (4) et sont façonnées thermoplastiquement sur la face postérieure du panneau (4).

9. Recouvrement d'airbag selon l'une des revendications 1 à 6, **caractérisé en ce que** les éléments en forme de barrettes (1, 2, 3) avec broches (5) en saillie sont réalisés d'un seul tenant avec les broches (5) et sont en une matière plastique thermodurcissable.

10. Recouvrement d'airbag selon la revendication 9, **caractérisé en ce que** les broches (5) s'étendent à travers le panneau (4) et sont façonnées sur la face postérieure du panneau (4) au moyen d'un rayon laser.

11. Recouvrement d'airbag selon l'une des revendications 1 à 6, **caractérisé en ce que** les éléments en forme de barrettes (1, 2, 3) avec broches (5) en saillie sont réalisées d'un seul tenant avec les broches (5) et sont en métal, de préférence en un alliage de métal léger.

12. Recouvrement d'airbag selon la revendication 11, **caractérisé en ce que** éléments en forme de barrettes (1, 2, 3) avec broches (5) en saillie sont découpées à partir d'un produit brut en tôle.

13. Recouvrement d'airbag selon l'une des revendications 7 à 11, **caractérisé en ce que** les éléments en forme de barrettes (1, 2, 3) avec broches (5) en saillie sont fabriqués par coulage ou moulage sous pression dans des moules.
